## Europäisches Patentamt
## European Patent Office
## Office européen des brevets

(19)

(11) Publication number: **0 061 262**
**A1**

(12) # EUROPEAN PATENT APPLICATION

(21) Application number: **82301247.1**

(22) Date of filing: **11.03.82**

(51) Int. Cl.³: **F 01 K 23/06**
**F 02 C 7/08, F 02 C 3/20**

(30) Priority: **23.03.81 GB 8108992**

(43) Date of publication of application:
**29.09.82 Bulletin 82/39**

(84) Designated Contracting States:
**DE FR GB IT NL**

(71) Applicant: **CPC INTERNATIONAL INC.**
**International Plaza P.O. Box 8000**
**Englewood Cliffs New Jersey 07632(US)**

(72) Inventor: **Cicuttini, Amelio**
**CPC EUROPE LIMITED Avenue Louise 149 BTE 13**
**B-1050 Brussels(BE)**

(74) Representative: **Pennant, Pyers et al,**
**Stevens, Hewlett & Perkins 5 Quality Court Chancery**
**Lane**
**London, WC2A 1HZ(GB)**

(54) **Power generating system.**

(57) A power generating system is provided of the kind where compressed heated air is used to burn a first fuel (20) and the combustion products used to drive a gas turbine (10), part or all of the exhaust gases (28, 29) from the gas turbine (10), which still contain oxygen, being then used to burn a second fuel (26) so as to heat the incoming compressed air (36). The amount of gas turbine exhaust used in this way is greater than, preferably from 1.5 to 3 times, that required for combustion of the second fuel (26).

The second fuel may be coal, wood or crude oil.

FIG.1

EP 0 061 262 A1

POWER GENERATING SYSTEM

This invention relates to power generating systems of the kind where compressed heated air is used to burn a first fuel and the combustion products used to drive a gas turbine; part or all of the exhaust gases from the gas turbine, which still contain oxygen, being then used to burn a second fuel so as to heat the incoming compressed air.

Although not usual, such systems are known. They were described for example, in British Patent Specifications 716433 and 760415, and in European Patent Applications 0001569 and 0017657. The reasons for using two separate combustion chambers included flexibility of response to changing power load, ease of start-up, and improved efficiency. However, advantages of the systems were not described in detail. So far as can be determined, the amount of the gas turbine exhaust used in each case for combustion of the second fuel contained no more oxygen than was necessary for complete combustion of the second fuel.

According to the present invention, the volumes of gases in the system are controlled so as to achieve two advantages not taught or suggested in the aforesaid patent specifications:-

a)   power generation by gas turbine in which the major part of the fuel can be one which cannot be used directly in gas turbines;

b)   further improvements in efficiency.

The invention provides a power generating system comprising:-

a gas turbine, and associated therein,

a first combustion chamber provided with a first fuel and compressed oxygen-containing gas for combustion thereof, and means for passing a gaseous output from the first combustion chamber to the gas turbine so as to generate power thereby,

a second combustion chamber provided with a second fuel and oxygen-containing gas  for combustion thereof,

a supply of compressed oxygen-containing gas, and

a heat-exchanger for transferring heat from the second combustion chamber to the compressed oxygen-containing gas for supply to the first combustion chamber,

characterized in that at least part of an exhaust from the gas turbine is used as oxygen-containing gas for combustion of the second fuel, the amount of said gas turbine exhaust used containing more oxygen than is required for complete combustion of the second fuel.

The first fuel is typically gas or light petroleum distillate suitable for use in gas turbine combustion chambers.   The nature of the second fuel is less critical. It may also be gas or a refined oil.   But it is possible, and will generally be cheaper, to use a different fuel such as coal, wood or crude oil or nuclear power, which may be available.

The second combustion chamber may advantageously be a fluidized bed burner, and the heat exchanger may conveniently be partly or wholly immersed in the fluidized bed.

The gas turbine exhaust contains residual oxygen. The amount of this exhaust that is passed to the second combustion chamber contains more oxygen than that required for combustion of the second fuel, and may contain up to 5 times the amount of oxygen required.   Preferably, the exhaust contains from 1.5 to 3 times the amount of oxygen required. Within this range, the efficiency of the system increases with increasing excess oxygen ratio. But the capital cost of the equipment, particularly the heat exchanger, also increases with increasing excess oxygen ratio. The excess oxygen ratio is defined as the ratio of the oxygen actually supplied to the oxygen theoretically required for combustion.

The gas turbine exhaust not passed to the second combustion chamber may be used in various ways:-

a) it may be passed to a waste heat boiler to generate secondary power by means of a steam turbine.

b) it may be used for combustion of fuel in a steam-generating or other power plant.

Another important application of this invention is in conjunction with existing power plants. Thus, some or all of the air intended for combustion in an existing power plant may be pretreated by being passed through the system of the present invention. This air is used to generate additional power in an efficient manner and is finally supplied to the existing power plant in a preheated condition.

In the accompanying drawings:-

Figure 1 is a diagram of a power generating system according to the invention;

Figures 2 and 3 are diagrams showing modification of the system of Figure 1;

Figure 4 is a graph of logarithmic mean temperature difference between the heat exchanger and its surroundings plotted against oxygen excess in the second combustion chamber.

Like numerals refer to like parts in all drawings.

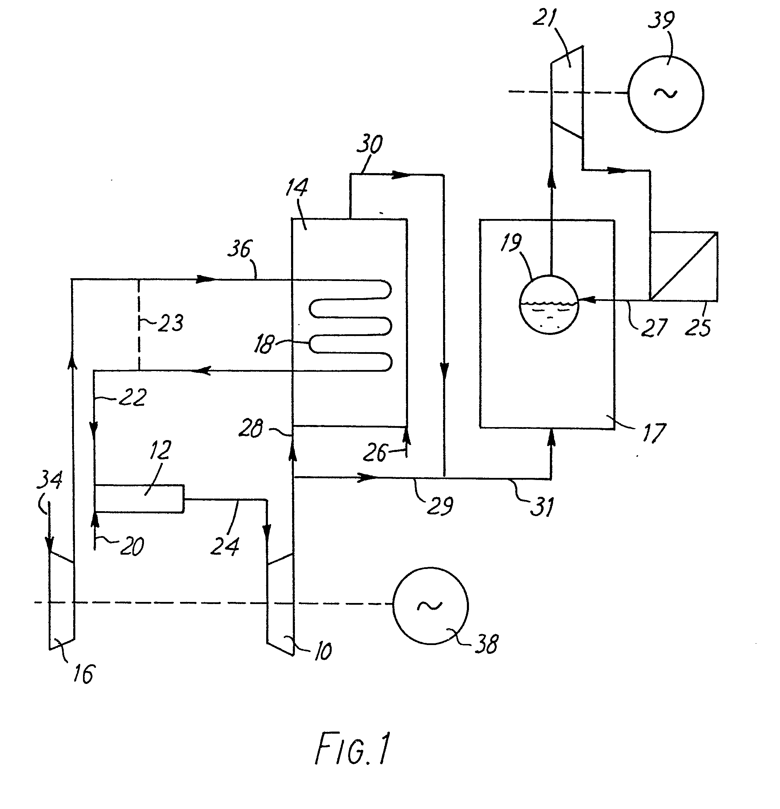

Referring to Figure 1, the system comprises a gas turbine 10, a first combustion chamber 12, a second combustion chamber 14, an air compressor 16, a waste heat boiler 17, and a heat exchanger 18 within the second combustion chamber.   The first combustion chamber 12, which is usually integral with the gas turbine 10, is provided with a supply 20 of a first fuel and a supply 22 of heated compressed oxygen-containing gas, typically air, from the heat exchanger 18.   Gaseous combination products pass via line 24 to gas turbine 10.   The exhaust from the gas turbine 10 is divided into two streams, of which one 28 passes to the second combustion chamber 14 and the other 29 passes to the waste heat boiler 17.

The second combustion chamber 14 is provided with a supply 26 of a second fuel and a supply 28 of oxygen-containing gas.   Gaseous combustion products leave the chamber at 30 and pass to the waste heat boiler 17. The air compressor 16 is provided with an air inlet 34, and an outlet 36 for compressed air leading to the heat-exchanger 18.

Air enters the system at 34 and is compressed at 16 to a suitable pressure, typically 6 - 15 atmospheres guage, for the gas turbine 10.   The compressed air passes via line 36 to the heat-exchanger 18 where its

- 5 -

0061262

temperature is raised to the maximum, typically 600 - 800°C which the heat-exchanger is capable of sustaining. The heated compressed air passes via line 22 to the first combustion chamber 12 where it is further heated by combustion of a suitable fuel, for example gas or light petroleum distillate, supplied under pressure at 20. A by pass line 23 is provided between line 36 and 22, so that, if necessary to avoid overheating the gas turbine 10, compressed air which has not been preheated may be passed to the first combustion chamber 12. The amount of fuel burned in this chamber is chosen to raise the temperature of the gaseous combustion products to a figure, up to 1000°C or more, suitable for the gas turbine 10. The hot combustion products pass via line 24 to the gas turbine which thereby generates power, partly to drive the air compressor 16 and partly excess power 38 (AC or DC electrical or mechanical) for use as required. Part of the oxygen-containing exhaust from the gas turbine passes via line 28 to the second combustion chamber where it is used to burn the second fuel supplied at 26 to provide heat for the heat-exchanger 18.

The nature of the fuel supplied at 26 for combustion in the second combustion chamber 14 is not critical, and can be chosen having regard to the cost and availability of various fuels. It is possible for the first and second fuels, supplied at 20 and 26, to be the same; it is possible for a single fuel to be split into two fractions, for example by partial gasification, one for supply at 20 and the other at 26; these possibilities are discussed further below. More usually, however, the second fuel supplied at 26 will be a difficult fuel, one such as coal or wood or crude oil, which either cannot be used directly in a gas turbine or which can be used only at such extra expense that the operating cost is not competitive with conventional systems using an intermediary fluid, such as steam.

The second stream 29 of exhaust from the gas turbine 10 and the gaseous combustion products 30 from the second combustion chamber are combined at 31 and passed to the waste heat boiler 17. Here steam is boiled at 19 under high pressure and used to drive a condensing steam turbine 21 so as to generate more power 39 for use as required. The turbine exhaust is condensed in a condenser 25 and recycled via line 27 to the boiler at 19.

The amount of gas turbine exhaust passed via line 28 to the second combustion chamber 14 contains oxygen in an amount greater than that needed to burn the fuel supplied at 26, and preferably in an amount of 1.5 to 3 times that needed.

The waste heat boiler 17 is not an essential feature of the invention. The exhaust gas streams 29 and 30 could be put to other uses, for example for drying. When the waste heat boiler 17 is used, the incoming gas stream needs to be at a sufficiently high temperature for reasonably efficient high pressure steam generation, and conditions in the gas turbine 10 and the second combustion chamber 14 need to be determined with this in mind.

When the second fuel is different from, and cheaper than, the first fuel, it will naturally be desired to maximise the ratio of second to first fuel. One way of doing this is to increase the temperature of the compressed air in the heat exchanger 18. Other things being equal, the higher the temperature of the compressed air leaving the heat exchanger, the greater is the ratio of second to first fuel used. A limit on the temperature of the compressed air is set by the capital cost of the equipment and the current technology of heat exchangers. Preferably, the first fuel contributes from 20% to 55%, and the second fuel correspondingly contributes from 80% to 45% of the total heat input to the system.

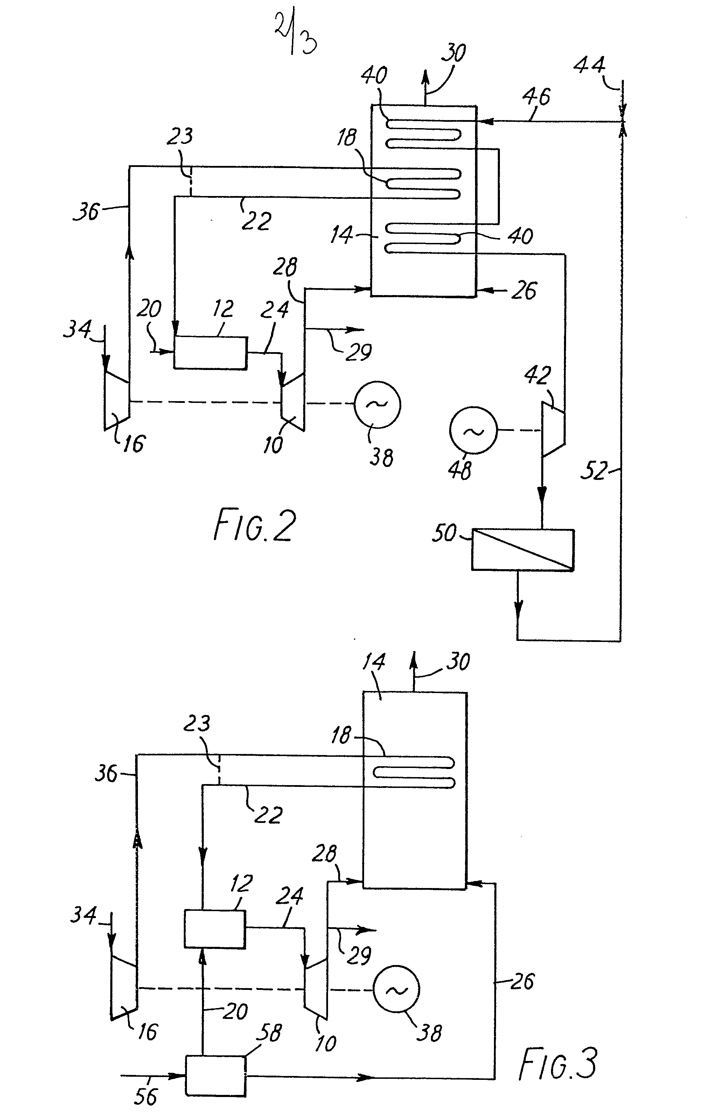

Referring now to Figure 2, the system shown differs from that of Figure 1 by the omission of the waste heat boiler 17 and the provision of a secondary heat recovery system comprising a series of heat exchangers 40 in the second combustion chamber 14 and a steam turbine 42. Water enters this secondary system at 44, and passes via line 46 to the heat exchangers 40 where it is converted into steam. This is used to drive the steam turbine 42 so as to generate secondary power as shown at 48. The exhaust from the turbine passes to a condenser 50, while the condensate is recycled at 52.

Alternatively, if steam is required in the factory for other purposes, the condenser 50 and recycle line 52 can be dispensed with, and the steam turbine 42 designed to provide exhaust steam at the required pressure(s). By appropriate design of the second combustion chamber 14 and the various heat exchangers 18, 40 therein, the system can be arranged to provide power and steam in any desired ratio. This is a considerable advantage over the power plants burning difficult fuels generally in use today, which tend to produce too much steam and too little power.

Referring now to Figure 3, the system shown is similar to that of Figure 1 omitting the waste heat boiler 17, but the fuels for the first and second combustion chambers 12 and 14 are shown as coming from the same supply 56. This supply is split at 58 into first and second streams 20 and 26 which supply the first and second combustion chambers respectively.

The box 58 might be, for example, equipment for separating a supply of gas 56 into a high pressure stream 20 and a low pressure stream 26.

Alternatively, the box 58 might represent equipment for the partial gasification of a fossil fuel such as coal, heavy oil or tar or wood, the gas constituting the fuel for the first combustion chamber 12 and the solid residue passing via line 26 to the second combustion chamber 14.

The following Example illustrates the invention.

### Example

This Example is performed using the system illustrated in Figure 1, with the compressed air in line 22 at a temperature of $700^{o}C$ and the exhaust gas in line 28 containing 2.3 times the amount of oxygen required for combustion of the fuel in the secondary combustion chamber 14. Tables 1 and 2 below indicate the effect

of changing this temperature and this ratio.

The air intake 34 takes in 74073.4 kg/hr of air at a temperature of $15^{o}C$, and a moisture content of 0.00849 kg $H_2O$/kg dry air. The air compressor 16 operates at a compression ratio of 6.7:1 and raises the air to a temperature of .222$^{o}$C. 429.6 kg/hr of natural gas (latent heat value 12005 kcal/kg) is burnt in the combustion chamber 12, giving 74503 kg/hr of gas having an enthalpy of 244 kcal/kg at the entrance of the gas turbine 10.

The gas turbine 10 operates at a design heat rate of 3760 kcal/KWH to generate 3680 KWH of power (in addition to that needed to drive the compressor 16). The gas turbine exhaust has an enthalpy of 158.9 kcal/kg and contains 16% of residual oxygen.

In the second combustion chamber 15, there are burned 825 kg/hr of heavy fuel oil having a latent heat value of 9650 kcal/kg. This amount of oil is chosen in order that the combined exhaust gases in line 31 shall have a temperature of 500$^{o}$C which is the minimum needed for efficient steam generation in the secondary boiler 17.

For the theoretical combustion of 1 kg of heavy oil, 14.22 kg of air is needed. Since the exhaust gases being used for combustion only contain 16% oxygen (where air contains 21%), 18.66 kg of the exhaust gases are required for the combustion of 1 kg of heavy oil. Since in this example there are used exhaust gases containing 2.3 times the amount of oxygen required, 35194 kg/hr of the gas turbine exhaust is passed via line 28 to the second combustion chamber 14. (The remaining 39309 kg/hr is passed via line 29 to the waste heat boiler 17.)

The combustion temperature in 14 is 1200°C and the exhaust gas temperature in line 30 is 410°C.

The exhaust gases in lines 29 and 30 are combined to provide 75328 kg/hr of gas having a temperature of 500°C and an enthalpy of 148.18 kcal/kg. The waste heat boiler 17 generates 3.11 tons/hr of steam at a pressure of 4.1 MPa upstream, and 10kPa downstream, of the condensing steam turbine 21. The secondary heat recovery system is 69% efficient, and generates 3582 KWH of useable power at 39.

The total power reduced by the cycle is

$$3680 + 3582 = 7256 \text{ KWH}$$

The total heat consumption of the cycle is

$$429.6 \times 12005 + 825 \times 9650 = 13118598 \text{ kcal/hr.}$$

The electric efficiency of the cycle is

$$\frac{7256 \times 860}{13118598} = 47.6\%$$

In the above Example, the amount of heavy fuel oil burned in the second combustion chamber 14 was designed to generate a gas temperature in line 31 of 500°C. There are two other factors which might (but in this case did not) have required more heavy oil to be burned. These are

a) An increase in the amount of exhaust gas passed via line 28 results in a decrease in the combustion temperature generated in the second combustion chamber 14. This combustion temperature must be considerably higher than the maximum temperature to which it is desired to heat compressed air in the heat exchanger 18. This factor sets an upper limit on the amount of gas turbine exhaust, in excess of that required for combustion of the heavy oil, that can usefully be passed via line 28.

b) A decrease in the amount of exhaust gas passed via line 28 results in a decrease in the temperature of the gas in line 30. This temperature must be considerably higher than the temperature of the compressed air entering the heat exchanger. Otherwise elaborate and expensive equipment will be needed to achieve adequate heat exchange.

Table 1 below shows the effect of changing the excess oxygen ratio in the second combustion chamber 14. This is done by changing the proportions of gas turbine exhaust passing via lines 28 and 29. To enable comparisons to be made, it is assumed that the gas temperatures in lines 34, 36, 22 and 31, and also the enthalpies of the gases at the entrance and exit of the gas turbine 10, remain constant.

TABLE 1

| Compressed air heated to 700°C | | | | | |
|---|---|---|---|---|---|
| Heavy oil ($10^3$ kcal/hr) | 8637 | 8106 | 7961 | 7961 | 7961 |
| Gas ($10^3$ kcal/hr) | 5157 | 5157 | 5157 | 5157 | 5157 |
| Power from Gas Turbine (KWH) | 3680 | 3680 | 3680 | 3680 | 3680 |
| Power from Steam Condensing Turbine (KWH) | 3799 | 3629 | 3582 | 3582 | 3582 |
| Power Ratio (KWH/$10^6$ kcal) | 542 | 551 | 554 | 554 | 554 |
| Excess oxygen ratio (x theoretical) | 1.0 | 1.5 | 2.3 | 3.0 | 3.8 |
| Conversion efficiency of heat to electricity * (%) | 46.6 | 47.4 | 47.6 | 47.6 | 47.6 |

\* KWH x 860/kcal consumed

Table 2 below shows the effect of changing the temperature of the compressed air in line 22 (downstream of the heat exchanger 18) from 700°C to 800°C. Again, to enable comparisons to be made, it is assumed that the gas temperatures in lines 34, 36 and 31, and also the total volumes and the enthalpies of the gases at the entrance and exit of the gas turbine 10, remain the same as previously.

TABLE 2

| Compressed air heated to 800°C | | | | |
|---|---|---|---|---|
| Heavy Oil ($10^3$ kcal/hr) | 10422 | 9891 | 9746 | 9698 | 9698 |
| Gas ($10^3$ kcal/hr) | 3313 | 3313 | 3313 | 3313 | 3313 |
| Power from Gas Turbine (KWH) | 3680 | 3680 | 3680 | 3680 | 3680 |
| Power from Steam Generating Turbine (KWH) | 3791 | 3614 | 3568 | 3553 | 3553 |
| Power Ratio (KWH/$10^6$ kcal) | 543 | 552 | 555 | 556 | 556 |
| Excess Oxygen Ratio (x theoretical) | 1.0 | 1.5 | 2.3 | 3.0 | 3.8 |
| Conversion efficiency of heat to electricity * (%) | 46.7 | 47.5 | 47.7 | 47.8 | 47.8 |

* KWH x 860/kcal consumed.

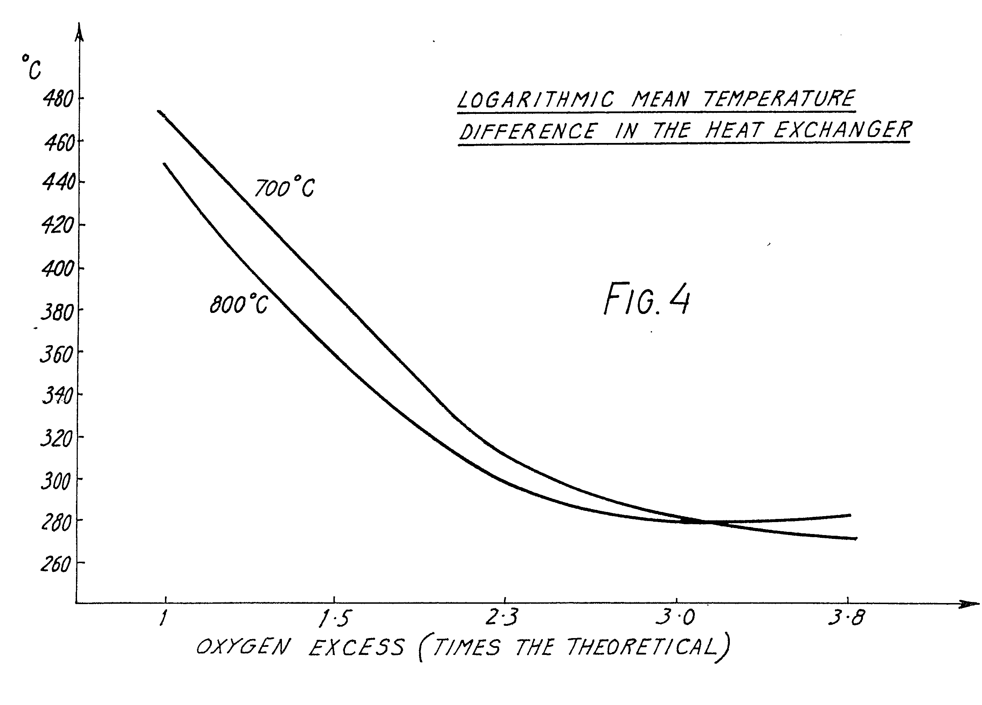

Figure 4 of the accompanying drawings is a graph of logarithmic mean temperature difference between the (compressed air) contents of the heat exchanger 18 and the heating medium in the second combustion chamber 14, plotted against the oxygen excess over that required to burn the second fuel. The lower this temperature difference goes, the more difficult it becomes to transfer heat to the compressed air, and the more expensive and elaborate is the heat exchanger required.

From Tables 1 and 2, it is apparent that conversion efficiency of heat to electricity rises with the excess oxygen ratio up to a value of 2 - 3. In order to achieve maximum efficienty without using an elaborate heat exchanger, an excess oxygen ratio of from 1.5 to 3 is preferred.

A comparison of Tables 1 and 2 shows that, by heating the compressed air up to a higher temperature, it is possible to achieve a higher overall conversion efficiency, and also to burn a larger proportion of heavy oil (or coal) to gas (or refined light oil). So it is preferred to heat the compressed air to as high a temperature as heat exchanger technology will permit.

CLAIMS

1.   A power generating system comprising:-

a gas turbine, and associated therewith,

a first combustion chamber provided with a first
fuel and compressed oxygen-containing gas for combustion
thereof, and means for passing a gaseous output from the
first combustion chamber to the gas turbine so as to
generate power thereby,

a second combustion chamber provided with a second
fuel and oxygen-containing gas for combustion thereof,

a supply of compressed oxygen-containing gas, and

a heat-exchanger for transferring heat from the
second combustion chamber to the compressed oxygen-
containing gas for supply to the first combustion chamber,

characterized in that at least part of an exhaust
from the gas turbine is used as oxygen-containing gas
for combustion of the second fuel, the amount of said
gas turbine exhaust used containing more oxygen than is
required for complete combustion of the second fuel.

2.   A power generating system as claimed in claim 1,
wherein the first fuel for the first combustion chamber
is natural gas or light petroleum distillate.

3.   A power generating system as claimed in claim 1 or
claim 2, wherein the second fuel for the second combustion
chamber is coal, wood or crude oil.

4.   A power generating system as claimed in any one of
claims 1 to 3, wherein the second combustion chamber is
a fluidized bed burner.

5.   A power generating system as claimed in any one of claims 1 to 4, wherein the heat exchanger is partly or wholly immersed in the fluidized bed.

6. A power generating system as claimed in any one of claims 1 to 5, wherein the amount of the gas turbine exhaust which is used for combustion of the second fuel contains up to 5 times the amount of oxygen required for said combustion.

7. A power generating system as claimed in claim 6, wherein the amount of the gas turbine exhaust used for combustion of the second fuel contains from 1.5 to 3 times the amount of oxygen required for said combustion.

8. A power generating system as claimed in any one of claims 1 to 7, wherein the compressed oxygen-containing gas is heated in the heat exchanger to a maximum temperature in the range 600$^{\circ}$C to 800$^{\circ}$C.

9. A power generating system as claimed in any one of claims 1 to 8, wherein the first fuel contributes from 20% to 55%, and the second fuel contributes correspondingly from 80% to 45%, of the total heat input to the system.

10. A power generating system as claimed in any one of claims 1 to 9, wherin part of the gas turbine exhaust and at least part of the gaseous combustion products from the second combustion chamber are used to generate secondary power by means of a waste heat boiler.

1/3

FIG.1

0061262

FIG.2

FIG.3

LOGARITHMIC MEAN TEMPERATURE
DIFFERENCE IN THE HEAT EXCHANGER

FIG. 4

°C axis values: 480, 460, 440, 420, 400, 380, 360, 340, 320, 300, 280, 260

Curve labels: 700°C, 800°C

OXYGEN EXCESS (TIMES THE THEORETICAL)

x-axis values: 1, 1·5, 2·3, 3·0, 3·8

3/3

0061262

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,D | EP-A-0 001 569 (SAARBERGWERKE) <br><br> *Page 5, paragraph 3 to page 7, paragraph 2* | 1-5,8, 10 | F 01 K 23/06 <br> F 02 C 7/08 <br> F 02 C 3/20 |
| X,D | EP-A-0 017 657 (SULZER) <br><br> *Page 6, line 35 to page 7, line 3; page 4, line 21 to page 5, line 4; figure 2* | 1-5,8, 10 | |
| X | FR-A-1 131 003 (SULZER) <br> *The whole document* | 1,2,9 | |
| X | FR-A-1 467 142 (BEYRARD) <br> *The whole document* | 1 | |
| X | BROWN BOVERI MITTEILUNGEN, vol. 47, no. 12, December 1960, pages 783-799, Brown Boveri & Cie A.G., Baden (CH); C.SEIPPEL et al.: "Zur Technik kombinierter Dampf- und Gasturbinenanlagen". | 1,10 | TECHNICAL FIELDS SEARCHED (Int. Cl. 3) <br><br> F 01 K <br> F 02 C |
| X | FR-A-2 370 249 (MAGYAR TUDOMANYOS) <br> *Page 1, line 20 to the end of page 4* | 1,2,3, 4 | |
| X,D | GB-A- 760 415 (GARRETT) <br> *The whole document* | 1 | |

The present search report has been drawn up for all claims

| Place of search | Date of completion of the search | Examiner |
|---|---|---|
| THE HAGUE | 25-06-1982 | IVERUS D. |

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| X,D | GB-A- 716 433 (POWER JETS) *The whole document* | 1 | |
| A | FR-A-1 572 008 (CHEMICAL CONSTRUCTION) *Page 3, line 10 to page 10, line 33* | 1,2,3, 8,9 | |
| A | GB-A-1 498 814 (ROLLS ROYCE) | | |
| P,X | GB-A-2 076 062 (ENGLISH ELECTRIC) *The whole document* | 1,2,3, 4,5,7, 10 | |

TECHNICAL FIELDS
SEARCHED (Int. Cl. ³)

The present search report has been drawn up for all claims

| Place of search THE HAGUE | Date of completion of the search 25-06-1982 | Examiner IVERUS D. |
|---|---|---|